# EUROPEAN PATENT APPLICATION

(11) **EP 4 640 580 A1**
(43) Date of publication of application: **29.10.2025**
(21) Application number: 23907136.8
(22) Date of filing: 21.12.2023
(51) Int. Cl.: B65D 47/18, B65D 1/08, B65D 83/00

(54) **DROPPER VESSEL**

(30) Priority: 21.12.2022 JP 2022204430; 21.12.2022 JP 2022204438
(71) Applicant: Yoshino Kogyosho Co., Ltd., Koto-ku Tokyo 136-8531 (JP)
(72) Inventor: MAEDA Shinya, Tokyo 136-8531 (JP)
(74) Representative: Ipsilon
(86) International application number: PCT/JP2023/045918
(87) International publication number: WO 2024/135776

(57) **Abstract**

A dropper container includes: an actuation member (30) provided inside an outer cap (10) and configured to move up and down relative to an inner cap (50) by rotating around a container axis (O) relative to the inner cap; and an operation member (40) attached to the actuation member and forming an expansion/contraction space (K) communicating with an upper end opening of a dropper tube (60) between the operation member and the actuation member, wherein either one of the inner cap or the actuation member is provided with a sliding tube portion (33) forming part of a partition wall of an actuation space (S) communicating with the upper end opening of the dropper tube, and the other thereof is provided with a piston (80) configured to expand and contract the actuation space by sliding on an inner peripheral surface or an outer peripheral surface of the sliding tube portion as the actuation member moves up and down relative to the inner cap, the actuation member is formed in a tubular shape with a top including an actuation top wall (32) covering the upper end opening of the dropper tube from above and an actuation peripheral wall (31).

## Description

### TECHNICAL FIELD

The present invention relates to a dropper container.

Priority is claimed on Japanese Patent Application No. 2022-204438 filed on December 21, 2022, and Japanese Patent Application No. 2022-204430 filed on December 21, 2022, the contents of which are incorporated herein by reference.

### BACKGROUND ART

Conventionally, as shown in Patent Document 1, a dropper container having a dropper tube has been used. **In** the configuration of Patent Document 1, a valve tube hanging down from a top wall portion of an actuation member (movable lid portion) is inserted into an upper end opening (flange hole) of the dropper tube to seal the upper end opening, and when an outer cap (lid cover) together with the actuation member is rotated relative to a container body, the actuation member ascends relative to the container body so that the valve tube opens the upper end opening of the dropper tube and contents are sucked up into the dropper tube. Then, an operation member (push button) is pressed down relative to the actuation member so that the contents can be discharged from the dropper tube.

### Citation List

### Patent Document

Patent Document 1: Japanese Unexamined Patent Application, First Publication

### SUMMARY OF INVENTION

### Technical Problem

Since the dropper container of Patent Document 1 has a structure in which the valve tube is inserted into the upper end opening of the dropper tube to seal the upper end opening, appropriate dimensional accuracy is required for the upper end opening or the valve tube for sealing. If there is variation in the dimensions such as the diameter of the upper end opening or the valve tube, a gap is formed between the inner peripheral surface of the upper end opening and the outer peripheral surface of the valve tube when the valve tube is inserted into the upper end opening. As a result, the upper end opening may not be sealed appropriately. That is, in order to appropriately seal the upper end opening of the dropper tube, high dimensional accuracy may be required for the upper end opening or the valve tube.

An object of the present invention is to provide a dropper container capable of appropriately sealing an upper end opening of a dropper tube.

### Solution to Problem

A dropper container according to an aspect of the present invention includes: a container body having a tubular shape with a bottom and for storing contents; an inner cap detachably externally mounted on a mouth portion of the container body and configured to be attached to and detached from the mouth portion in accordance with rotation around a container axis; a dropper tube extending downward from the inner cap and having a lower end opening located inside the container body; an outer cap externally mounted on the inner cap to be rotatable around the container axis in a state where a predetermined amount or more of rotation around the container axis is restricted; an actuation member provided inside the outer cap to be restricted in rotation around the container axis relative to the outer cap and configured to move up and down relative to the inner cap by the actuation member rotating around the container axis relative to the inner cap; and an operation member attached to the actuation member and forming an expansion/contraction space communicating with an upper end opening of the dropper tube between the operation member and the actuation member, wherein either one of the inner cap or the actuation member is provided with a sliding tube portion extending in an up-down direction and forming part of a partition wall of an actuation space communicating with the upper end opening of the dropper tube, and the other of the inner cap or the actuation member is provided with a piston configured to expand and contract the actuation space by sliding on an inner peripheral surface or an outer peripheral surface of the sliding tube portion as the actuation member moves up and down relative to the inner cap, and wherein the actuation member is formed in a tubular shape with a top including an actuation top wall covering the upper end opening of the dropper tube from above and an actuation peripheral wall.

According to the above aspect, when the outer cap is rotated around the container axis relative to the container body, the outer cap rotates relative to the inner cap within a predetermined range. At this time, the actuation member restricted from rotating relative to the outer cap also ascends while rotating relative to the inner cap. Accordingly, the actuation top wall moves upward away from the dropper tube so that the upper end opening of the dropper tube is opened and the piston and the sliding tube portion slide on each other. Further, as the volume of the actuation space increases, a negative pressure is formed inside the actuation space. Thus, a negative pressure is also formed inside the dropper tube communicating with the actuation space to suck the contents of the container body from the lower end opening of the dropper tube. At this time, since the increase in volume of the actuation space is determined based on the amount of relative movement between the piston and the sliding tube portion in the up-down direction, an approximately fixed amount of contents can be sucked up into the dropper tube by rotating the outer cap relative to the inner cap by a predetermined amount.

Then, when the outer cap is further rotated, the outer cap and the inner cap rotate together relative to the container body, so that the inner cap is separated from the mouth portion of the container body and the dropper tube is pulled out from the inside of the container body. Then, when the operation member is operated to decrease the volume of the expansion/contraction space, the air of the expansion/contraction space flows into the upper end opening of the dropper tube through the actuation space, so that the contents held inside the dropper tube are discharged from the lower end opening of the dropper tube.

Since the actuation top wall of the actuation member covers the upper end opening of the dropper tube from above, even if there is a variation in the diameter or the like of the upper end opening, the actuation top wall can be appropriately maintained in a state of covering the upper end opening and hence the actuation top wall can appropriately seal the upper end opening of the dropper tube.

In the above aspect, the inner cap may be provided with a sealing material configured to come into contact with a lower surface of the actuation top wall to seal the upper end opening of the dropper tube, and the sealing material may be formed of a material softer than that forming the actuation member.

In this case, since the sealing material pressed down by the lower surface of the actuation top wall and sealing the upper end opening of the dropper tube is provided between the lower surface of the actuation top wall and the upper end opening of the dropper tube and the sealing material is formed of a material softer than that forming the actuation member, it is possible to seal the upper end opening of the dropper tube in a state where the sealing material is compressed and deformed and to reliably seal the upper end opening of the dropper tube.

In the above aspect, the sliding tube portion may be formed on the lower surface of the actuation top wall, the piston may be provided in the inner cap, and the sealing material may be formed integrally with the piston.

In this case, since the sealing material is formed integrally with the piston, it is possible to reliably seal the upper end opening of the dropper tube while preventing an increase in the number of components.

In the above aspect, the actuation member may seal the upper end opening of the dropper tube, the inner cap may be provided with an insertion tube inserted into the actuation peripheral wall and extending in the up-down direction, either one of an inner peripheral surface of the actuation peripheral wall or an outer peripheral surface of the insertion tube may be provided with an engagement protrusion inserted into a guide groove formed on the other thereof to be movable along the guide groove, the actuation member may move up and down relative to the inner cap as the engagement protrusion moves relatively along the guide groove in accordance with rotation of the actuation member around the container axis relative to the inner cap, and a flat surface extending in a direction orthogonal to the up-down direction and facing in the up-down direction may be formed in a portion of an inner surface of the guide groove against which the engagement protrusion abuts in the up-down direction when a pressing down force is applied to the actuation member located at an ascending end position thereof.

In this case, since the flat surface extending in a direction orthogonal to the up-down direction and facing in the up-down direction is formed in a portion of the inner surface of the guide groove against which the engagement protrusion is pressed in the up-down direction when a pressing down force is applied to the actuation member located at the ascending end position, even if the pressing down force is transmitted to the actuation member when the operation member is pressed down with a strong force, the engagement protrusion is pressed against the flat surface of the guide groove, and the engagement protrusion can be restricted from moving along the guide groove. Accordingly, even if the operation member of the dropper container, designed such that the amount of contents to be sucked into the dropper tube before the actuation member reaches the ascending end position is greater than the amount of contents (hereinafter, referred to as a specified amount) to be discharged when the operation member is pressed down with a normal force, is pressed down with a strong force, the contents inside the dropper tube can be prevented from being discharged from the lower end opening of the dropper tube in an amount greater than the specified amount.

In the above aspect, the actuation member may seal the upper end opening of the dropper tube, the inner cap may be provided with an insertion tube inserted into the actuation peripheral wall and extending in the up-down direction, either one of an inner peripheral surface of the actuation peripheral wall or an outer peripheral surface of the insertion tube may be provided with an engagement protrusion inserted into a guide groove formed on the other thereof to be movable along the guide groove, the actuation member may move up and down relative to the inner cap as the engagement protrusion moves relatively along the guide groove in accordance with rotation of the actuation member around the container axis relative to the inner cap, and the guide groove may be provided with a restricting portion configured to be separably locked on the engagement protrusion and to restrict ascending movement of the actuation member when the actuation member is located at a descending end position thereof.

In this case, since the guide groove is provided with the restricting portion, the engagement protrusion is separably locked on the restricting portion when the actuation member is located at the descending end position and seals the upper end opening of the dropper tube, so that the ascending movement of the actuation member can be restricted, and the actuation member located at the descending end position can be restricted from suddenly ascending relative to the dropper tube due to vibration, impact or the like during transportation to release the sealing of the upper end opening of the dropper tube. Advantageous Effects of Invention

According to the above aspects of the present invention, the upper end opening of the dropper tube can be appropriately sealed.

### BRIEF DESCRIPTION OF DRAWINGS

[FIG. 1] A longitudinal cross-sectional view showing portions of a dropper container according to a first embodiment, the portions being away from each other by 90° around a container axis.
[FIG. 2] A longitudinal half-cross-sectional view of an actuation member of FIG. 1.
[FIG. 3] A longitudinal half-cross-sectional view of a push button of FIG. 1.
[FIG. 4] A side view of an inner cap of FIG. 1.

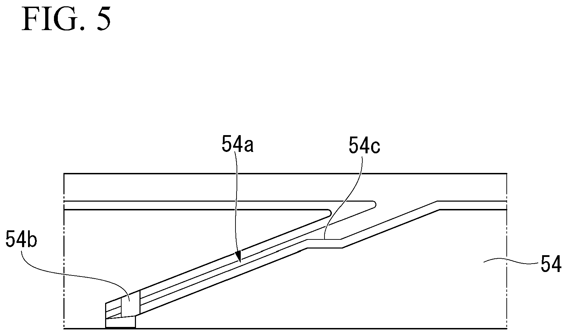

[FIG. 5] A development view of part of an insertion tube of FIG. 4.
[FIG. 6] A view showing a state where an outer cap or the like of FIG. 1 is rotated by 90° to a loosening side and an operation member and the actuation member are raised.
[FIG. 7] A longitudinal cross-sectional view showing portions of a dropper container according to a second embodiment, the portions being away from each other by 90° around a container axis.
[FIG. 8] A longitudinal half-cross-sectional view of an actuation member of FIG. 7.
[FIG. 9] A development view of part of an insertion tube of an inner cap of FIG. 7.

### DESCRIPTION OF EMBODIMENTS

Hereinafter, a dropper container of the present embodiment will be described with reference to the drawings.

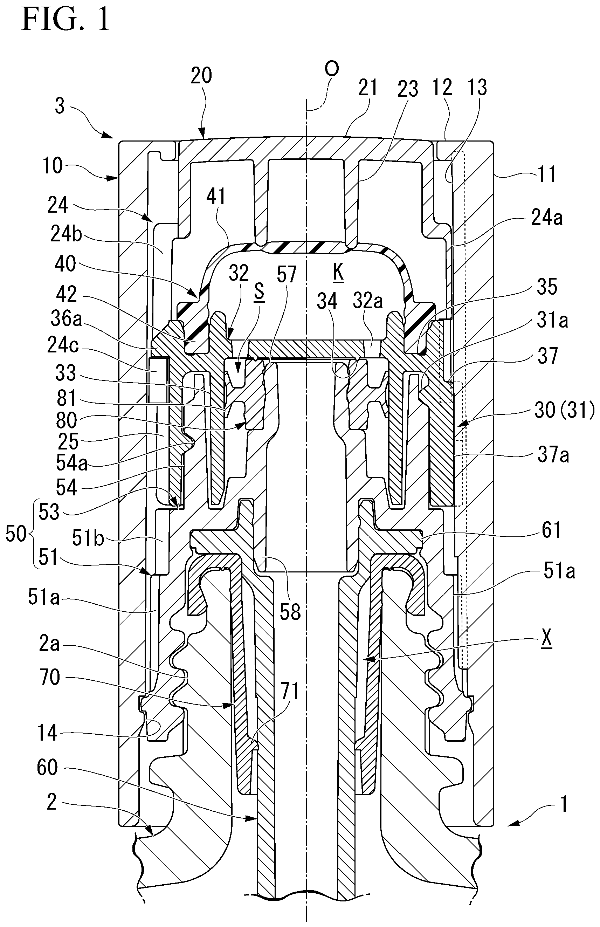

As shown in FIG. 1, a dropper container 1 includes a container body 2, an outer cap 10, a push button 20, an actuation member 30, an operation member 40, an inner cap 50, a dropper tube 60, a scraping tube member 70, and a piston 80. Furthermore, the scraping tube member 70 may not be provided.

The container body 2 is formed in a tubular shape with a bottom, and contents are stored in the container body 2. A male thread is formed on the outer peripheral surface of a mouth portion 2a of the container body 2.

The contents include, for example, liquid medicines, liquid cosmetics or the like. The components of the dropper container 1 in the present embodiment are formed of resin materials. The dropper container 1 of the present embodiment does not have any metal member (a coil spring and the like).

The outer cap 10, the push button 20, the actuation member 30, the operation member 40, the inner cap 50, the dropper tube 60, and the piston 80 constitute a dropper assembly 3 detachably mounted on the container body 2.

### (Direction Definition)

The central axes of the container body 2 and the dropper tube 60 are positioned in a common axis. Hereinafter, this axis will be referred to as a container axis O, a direction along the container axis O will be referred to as an up-down direction, and in the up-down direction, the mouth portion 2a-side of the container body 2 will be referred to as an upper side, and the bottom side of the container body 2 will be referred to as a lower side. A direction intersecting the container axis O when viewed in the up-down direction will be referred to as a radial direction, and a direction going around the container axis O when viewed in the up-down direction will be referred to as a circumferential direction.

One side in the circumferential direction may be referred to as a "loosening side". When the actuation member 30 is rotated toward the loosening side relative to the inner cap 50, the actuation member 30 ascends relative to the inner cap 50, and when the inner cap 50 is rotated toward the loosening side relative to the mouth portion 2a, the inner cap 50 ascends relative to the mouth portion 2a.

The other side in the circumferential direction may be referred to as a "fastening side". When the actuation member 30 is rotated toward the fastening side relative to the inner cap 50, the actuation member 30 descends relative to the inner cap 50, and when the inner cap 50 is rotated toward the fastening side relative to the mouth portion 2a, the inner cap 50 descends relative to the mouth portion 2a.

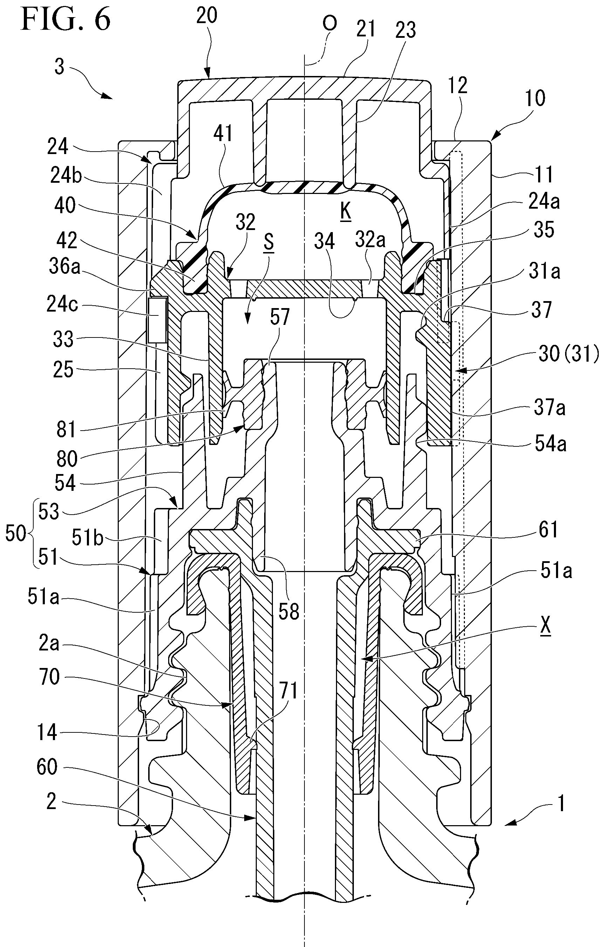

In FIGS. 1 and 6, the figures on the right and left sides of the container axis O represent portions away from each other by 90° around the container axis O.

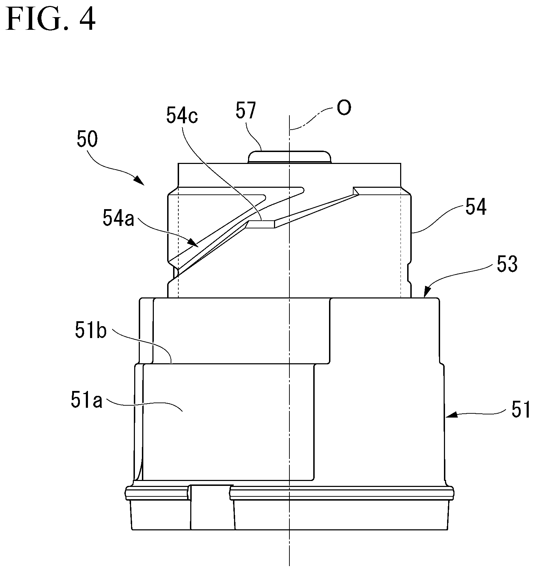

As shown in FIGS. 1 and 4, the inner cap 50 is formed in a tubular shape with a top including an annular inner cap top wall 53 and an inner cap peripheral wall 51, and is arranged coaxially with the container axis O. The inner cap 50 is detachably externally mounted on the mouth portion 2a and is attached to and detached from the mouth portion 2a according to rotation thereof around the container axis O. In the example shown in the drawings, a female thread is formed on the inner peripheral surface of the inner cap peripheral wall 51, which screws into the male thread formed on the outer peripheral surface of the mouth portion 2a.

The inner cap top wall 53 is provided with an insertion tube 54, a holding tube portion 57, and a communication tube portion 58. The insertion tube 54, the holding tube portion 57, and the communication tube portion 58 are arranged coaxially with the container axis O.

The insertion tube 54 extends upward from the inner cap top wall 53. The communication tube portion 58 extends downward from the inner peripheral edge portion of the inner cap top wall 53. The holding tube portion 57 extends upward from the inner peripheral edge portion of the inner cap top wall 53.

Two releasing recesses 51b are formed on the outer peripheral surface of an upper portion of the inner cap peripheral wall 51 with a gap therebetween in the circumferential direction. The releasing recess 51b opens at the upper surface of the inner cap top wall 53. The releasing recess 51b has a rectangular shape long in the circumferential direction when viewed from the outside in the radial direction. The surface facing radially outward among the inner surfaces of the releasing recess 51b is located further radially inward than a descent restriction portion 25 that will be described later.

Two circumferential restriction recesses 51a are formed on the outer peripheral surface of a lower portion of the inner cap peripheral wall 51 with a gap therebetween in the circumferential direction. The circumferential center portions of the circumferential restriction recess 51a and the releasing recess 51b are at the same position in the circumferential direction. The circumferential length of the circumferential restriction recess 51a is shorter than the circumferential length of the releasing recess 51b. The radial depth of the circumferential restriction recess 51a is shallower than the radial depth of the releasing recess 51b. The circumferential restriction recess 51a opens at the surface facing upward among the inner surfaces of the releasing recess 51b. The circumferential restriction recess 51a is provided on the entire angular range of about 90° around the container axis O.

As shown in FIG. 1, the piston 80 is formed in an annular shape and is externally fitted and fixed to the upper end portion of the holding tube portion 57. The piston 80 is provided with an annular sliding contact portion 81 protruding radially outward.

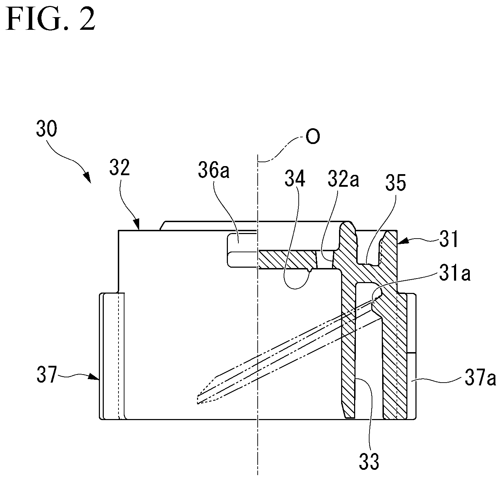

As shown in FIGS. 1 and 2, the actuation member 30 is formed in a tubular shape with a top including an actuation top wall 32 and an actuation peripheral wall 31, and is arranged coaxially with the container axis O. In a state where the actuation top wall 32 covers the upper end opening of the dropper tube 60 from above, the actuation member 30 seals the upper end opening of the dropper tube 60.

The insertion tube 54 of the inner cap 50 is inserted into the actuation peripheral wall 31. An engagement protrusion 31a is formed on either one of the inner peripheral surface of the actuation peripheral wall 31 or the outer peripheral surface of the insertion tube 54 and is inserted into a guide groove 54a formed on the other of the inner peripheral surface and the outer peripheral surface to be movable along the guide groove 54a. The engagement protrusion 31a moves relatively along the guide groove 54a in accordance with the rotation of the actuation member 30 around the container axis O relative to the inner cap 50, so that the actuation member 30 moves up and down relative to the inner cap 50.

The guide groove 54a is formed on the outer peripheral surface of the insertion tube 54, and the engagement protrusion 31a is formed on the inner peripheral surface of the actuation peripheral wall 31. Furthermore, the guide groove 54a may be formed on the inner peripheral surface of the actuation peripheral wall 31, and the engagement protrusion 31a may be formed on the outer peripheral surface of the insertion tube 54. Each of the guide groove 54a and the engagement protrusion 31a extends downward and from the loosening side toward the fastening side in the circumferential direction.

The guide groove 54a is provided with a restricting portion 54b and a flat surface 54c. Furthermore, the guide groove 54a may not be provided with the restricting portion 54b. In addition, the guide groove 54a may not be provided with the flat surface 54c.

The restricting portion 54b is releasably locked on the engagement protrusion 31a in a state where the actuation member 30 is located at the descending end position thereof and seals the upper end opening of the dropper tube 60, thereby restricting the ascending movement of the actuation member 30. The restricting portion 54b is provided at the end of the guide groove 54a on the fastening side in the circumferential direction. The restricting portion 54b is a protrusion formed on the inner surface of the guide groove 54a and makes the groove depth of the guide groove 54a decrease. The engagement protrusion 31a comes into strongest contact with the restricting portion 54b in the inner surface of the guide groove 54a to restrict the ascending movement of the actuation member 30.

The flat surface 54c is formed on a portion of the inner surface of the guide groove 54a, against which the engagement protrusion 31a abuts in the up-down direction when a pressing down force is applied to the actuation member 30 located at the ascending end position thereof, and extends in a direction orthogonal to the up-down direction and faces in the up-down direction.

In the example shown in the drawings, the flat surface 54c faces upward. When the actuation member 30 is located at the ascending end position, the end of the engagement protrusion 31a on the fastening side in the circumferential direction abuts against the flat surface 54c. The flat surface 54c is provided at the end of the guide groove 54a on the loosening side in the circumferential direction.

Furthermore, the guide groove 54a may be formed on the inner peripheral surface of the actuation peripheral wall 31, the flat surface 54c may face downward and may be provided at the end of the guide groove 54a on the fastening side in the circumferential direction.

The actuation top wall 32 is provided with a sealing protrusion 34, a sliding tube portion 33, a plurality of air holes 32a, and a fixing groove 35, and seals the upper end opening of the dropper tube 60.

The sealing protrusion 34 protrudes downward from the lower surface of the actuation top wall 32 and is in liquid-tight contact with the upper end opening edge of the piston 80 continuously on the entire circumference.

The sliding tube portion 33 protrudes downward from the lower surface of the actuation top wall 32 and is inserted between the outer peripheral surface of the piston 80 and the inner peripheral surface of the insertion tube 54 of the inner cap 50. The sliding tube portion 33 forms part of the partition wall of an actuation space S communicating with the upper end opening of the dropper tube 60. In the example shown in the drawings, the inside of the sliding tube portion 33 in the radial direction is the actuation space S. The sliding contact portion 81 of the piston 80 is in air-tight contact with the inner peripheral surface of the sliding tube portion 33 to be slidable thereon up and down. Accordingly, as the actuation member 30 moves up and down relative to the inner cap 50, the sliding contact portion 81 of the piston 80 slides on the inner peripheral surface of the sliding tube portion 33 to expand and contract the actuation space S. The actuation space S is a portion inside the sliding tube portion 33 located above the piston 80.

The air hole 32a penetrates the actuation top wall 32 in the up-down direction and opens to the actuation space S. The air hole 32a is located further radially outward than the sealing protrusion 34 and further radially inward than the sliding tube portion 33.

The fixing groove 35 is formed on the outer peripheral edge portion of the upper surface of the actuation top wall 32 and extends continuously on the entire circumferential length thereof.

The actuation member 30 includes a restriction protrusion 36a and a rotation restriction portion 37.

The restriction protrusion 36a protrudes radially outward from the outer peripheral surface of the upper end portion of the actuation peripheral wall 31. Two restriction protrusions 36a are provided on two sides sandwiching the container axis O in the radial direction.

The rotation restriction portion 37 protrudes radially outward from the outer peripheral surface of the actuation peripheral wall 31. Two rotation restriction portions 37 are provided on two sides sandwiching the container axis O in the radial direction. An actuation vertical groove 37a is formed on the outer peripheral surface of the rotation restriction portion 37 to extend continuously on the entire length thereof in the up-down direction.

The restriction protrusion 36a and the rotation restriction portion 37 are arranged at different positions in the circumferential direction. The restriction protrusion 36a and the rotation restriction portion 37 are provided at positions away from each other by about 90° around the container axis O.

The operation member 40 includes an elastic membrane 41 and a fixed portion 42, and is formed of an elastic body such as rubber or elastomer. The fixed portion 42 is formed in an annular shape and is formed to be thicker than the elastic membrane 41. The fixed portion 42 is fitted to the fixing groove 35 of the actuation member 30 to be fixed thereto. The elastic membrane 41 is formed in an upwardly convex curved shape (dome shape) and bulges upward from the fixed portion 42. The elastic membrane 41 covers the upper surface of the actuation top wall 32.

As described above, the operation member 40 is attached to the actuation member 30, thereby forming an expansion/contraction space K communicating with the upper end opening of the dropper tube 60 between the operation member 40 and the actuation member 30. The expansion/contraction space K communicates with the upper end opening of the dropper tube 60 through the air holes 32a and the actuation space S.

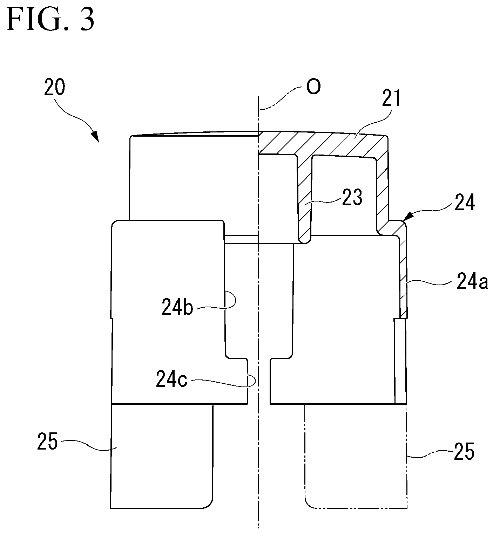

As shown in FIGS. 1 and 3, the push button 20 is formed in a tubular shape with a top including a button top wall 21 and a button peripheral wall 24, and is arranged coaxially with the container axis O.

The lower surface of the button top wall 21 is provided with a tubular pushing portion 23 extending downward. The lower end of the pushing portion 23 is in contact with the upper surface of the elastic membrane 41 of the operation member 40.

The inner and outer diameters of the lower portion of the button peripheral wall 24 are greater than those of the upper portion thereof. The outer peripheral surface of the lower portion of the button peripheral wall 24 is provided with a button surface 24a extending continuously on the entire length thereof in the up-down direction. Two button surfaces 24a are provided on two sides sandwiching the container axis O in the radial direction.

The lower portion of the button peripheral wall 24 is provided with an engagement hole 24b and a slit 24c.

The engagement hole 24b and the slit 24c penetrate the button peripheral wall 24 in the radial direction. Two engagement holes 24b are provided on two sides sandwiching the container axis O in the radial direction, and two slits 24c are also provided on the two sides. The slit 24c extends downward from the circumferential middle portion of the engagement hole 24b. The circumferential width of the slit 24c is less than the circumferential width of the engagement hole 24b.

The button surface 24a, and the engagement hole 24b and the slit 24c are provided at different positions in the circumferential direction. The button surface 24a, and the engagement hole 24b and the slit 24c are provided at positions away from each other by about 90° around the container axis O.

The actuation peripheral wall 31 of the actuation member 30 is inserted into the lower portion of the button peripheral wall 24 to be movable up and down. The restriction protrusion 36a provided in the actuation peripheral wall 31 is inserted into the engagement hole 24b to be movable up and down. The restriction protrusion 36a is in contact with or close to the lower edge facing upward of the inner peripheral surface of the engagement hole 24b. In the up-down direction, the length of the engagement hole 24b is equal to or greater than the length of the restriction protrusion 36a.

The push button 20 includes two descent restriction portions 25 provided with a gap therebetween in the circumferential direction. The descent restriction portion 25 protrudes downward from the lower end opening edge of the button peripheral wall 24 and extends in the circumferential direction. The two descent restriction portions 25 face each other in the radial direction. The lower edge of the descent restriction portion 25 is in contact with or close to the upper surface of the inner cap top wall 53. Accordingly, the descending movement of the push button 20 relative to the inner cap 50 is restricted. The descent restriction portion 25 is provided at a position away from the button surface 24a, the engagement hole 24b, and the slit 24c in the circumferential direction.

The outer cap 10 is formed in a tubular shape with a top including an outer cap peripheral wall 11 and an outer cap top wall 12. The outer cap 10 is arranged coaxially with the container axis O.

The outer cap top wall 12 is formed in an annular shape. The button top wall 21 is inserted into the outer cap top wall 12.

The outer cap peripheral wall 11 surrounds the push button 20, the actuation member 30, and the inner cap 50 from the outside in the radial direction. The inner peripheral surface of the outer cap peripheral wall 11 is provided with two vertical ribs 13 extending in the up-down direction and a locking protrusion 14. The vertical ribs 13 and the locking protrusion 14 protrude radially inward from the inner peripheral surface of the outer cap peripheral wall 11. The locking protrusion 14 is located below the vertical ribs 13. The two vertical ribs 13 face each other with the container axis O interposed therebetween in the radial direction.

The inner cap peripheral wall 51 is locked on the locking protrusion 14 from below the inner cap peripheral wall 51. Accordingly, the inner cap 50 is restricted from being detached downward from the outer cap 10.

The vertical rib 13 is integrally inserted into the actuation vertical groove 37a of the actuation member 30 and the circumferential restriction recess 51a of the inner cap 50 and is in contact with or close to the button surface 24a of the push button 20 in the radial direction. Among these, the circumferential sizes of the vertical rib 13 and the actuation vertical groove 37a are equivalent to each other. The push button 20 and the actuation member 30 are restricted from rotating around the container axis O relative to the outer cap 10. The vertical rib 13 is inserted into the actuation vertical groove 37a to be movable up and down.

The circumferential size of the circumferential restriction recess 51a is greater than the circumferential size of the vertical rib 13, and the vertical rib 13 is located at the end on the fastening side of two circumferential ends of the circumferential restriction recess 51a. Accordingly, when the outer cap 10 is rotated toward the loosening side in the circumferential direction, the vertical rib 13 moves toward the loosening side in the circumferential direction inside the circumferential restriction recess 51a, and the outer cap 10 together with the push button 20 and the actuation member 30 rotates relative to the inner cap 50. Then, when the vertical rib 13 reaches the end of the circumferential restriction recess 51a on the loosening side in the circumferential direction and abuts against the inner surface of the circumferential restriction recess 51a in the circumferential direction, the rotational movement of the outer cap 10 relative to the inner cap 50 is restricted. That is, the outer cap 10 is externally mounted on the inner cap 50 to be rotatable around the container axis O in a state where the rotation around the container axis O is restricted by a predetermined amount or more.

The dropper tube 60 extends downward from the inner cap 50, and the lower end opening thereof is located inside the container body 2. The communication tube portion 58 of the inner cap 50 is fitted into the upper end portion of the dropper tube 60. The upper end opening of the dropper tube 60 can communicate with the actuation space S and the expansion/contraction space K through the communication tube portion 58 and the holding tube portion 57. The upper end portion of the dropper tube 60 is provided with a flange portion 61 protruding radially outward. The flange portion 61 is fitted into the upper portion of the inner cap peripheral wall 51 to be fixed thereto.

The scraping tube member 70 is fixed to the mouth portion 2a, and the dropper tube 60 is inserted into the scraping tube member 70. A radial gap is provided between the inner peripheral surface of the scraping tube member 70 and the outer peripheral surface of the dropper tube 60.

The inner peripheral surface of the scraping tube member 70 is provided with a scraping protrusion piece 71 protruding radially inward and being into contact with the outer peripheral surface of the dropper tube 60. The scraping protrusion piece 71 is formed at the lower end portion of the scraping tube member 70. A portion of the inner peripheral surface of the scraping tube member 70 located below the scraping protrusion piece 71 extends radially inward and upward.

The scraping protrusion piece 71 is located at an equivalent position to the lower end of the inner cap peripheral wall 51 in the up-down direction, and a portion X of the gap between the inner peripheral surface of the scraping tube member 70 and the outer peripheral surface of the dropper tube 60, which is located above the scraping protrusion piece 71, secures a large volume.

Next, the operation of the dropper container 1 with the above-described configuration will be described.

When the outer cap 10 is rotated toward the loosening side in the circumferential direction relative to the container body 2, since the vertical rib 13 is inserted into the actuation vertical groove 37a and the restriction protrusion 36a is inserted into the engagement hole 24b, the actuation member 30 and the push button 20 together with the outer cap 10 rotate relative to the container body 2. At this time, the outer cap 10 rotates idly relative to the inner cap 50 until the vertical rib 13 reaches the end of the circumferential restriction recess 51a of the inner cap 50 on the loosening side in the circumferential direction. Accordingly, the outer cap 10, the push button 20, and the actuation member 30 rotate relative to the inner cap 50 until the vertical rib 13 reaches the end of the circumferential restriction recess 51a of the inner cap 50 on the loosening side in the circumferential direction.

When the actuation member 30 rotates relative to the inner cap 50, since the engagement protrusion 31a is inserted into the guide groove 54a to be movable along the guide groove 54a, the actuation member 30 ascends relative to the inner cap 50. At this time, the operation member 40 fixed to the actuation member 30 pushes up the pushing portion 23 of the push button 20, so that the push button 20 also ascends. As a result, as shown in FIG. 6, the button top wall 21 protrudes upward from the outer cap top wall 12, and the sealing protrusion 34 of the actuation member 30 moves upward away from the upper end opening edge of the piston 80. Further, as the sliding tube portion 33 of the actuation member 30 ascends while sliding on the sliding contact portion 81 of the piston 80, the volume of the actuation space S increases, and the pressure in the actuation space S becomes negative. Therefore, the contents in the container body 2 are sucked up from the lower end opening of the dropper tube 60. The amount of contents to be sucked into the dropper tube 60 is determined by the relative movement amount between the piston 80 and the sliding tube portion 33 in the up-down direction. Thus, the dropper container 1 can suck up an approximately fixed amount of contents into the dropper tube 60. At this time, a state where the engagement protrusion 31a is inserted into the guide groove 54a is maintained.

When the vertical rib 13 reaches the end of the circumferential restriction recess 51a of the inner cap 50 on the loosening side in the circumferential direction, the descent restriction portion 25 of the push button 20 faces the releasing recess 51b of the inner cap 50 in the up-down direction. Accordingly, when the push button 20 is pressed down, the descent restriction portion 25 enters the releasing recess 51b, and the descending movement of the push button 20 relative to the inner cap 50 is allowed.

When the outer cap 10 is further rotated toward the loosening side in the circumferential direction relative to the container body 2 from a state where the vertical rib 13 reaching the end of the circumferential restriction recess 51a on the loosening side in the circumferential direction abuts against the inner surface of the circumferential restriction recess 51a in the circumferential direction, the inner cap 50 rotates together with the outer cap 10. Accordingly, the inner cap 50 rotates toward the loosening side in the circumferential direction relative to the container body 2, so that the dropper assembly 3 is separable upward from the container body 2. Then, when the dropper assembly 3 is raised relative to the container body 2, the scraping protrusion piece 71 formed on the inner peripheral surface of the scraping tube member 70 slides on the outer peripheral surface of the dropper tube 60 to scrape off the contents adhering to the outer peripheral surface of the dropper tube 60.

For example, when the button top wall 21 is depressed while holding the outer cap 10 after the dropper assembly 3 is removed from the container body 2, the pushing portion 23 pushes the elastic membrane 41 downward. The operation member 40 is sandwiched between the pushing portion 23 and the actuation member 30 in the up-down direction, and the elastic membrane 41 is elastically deformed downward, so that the volume of the expansion/contraction space K decreases. As a result, the air of the expansion/contraction space K flows into the upper end opening of the dropper tube 60 through the air holes 32a and the actuation space S, so that the contents held inside the dropper tube 60 are discharged from the lower end opening of the dropper tube 60.

Here, the dropper container 1 is designed such that the amount of contents to be sucked up into the dropper tube 60 before the actuation member 30 reaches the ascending end position is greater than the amount of contents (hereinafter, referred to as a specified amount) to be discharged when the operation member 40 is pressed down with a normal force. Therefore, the specified amount of contents can be stably discharged from the dropper tube 60.

Furthermore, the dropper container may be designed such that the amount of the former is the same as the specified amount of the latter.

As described above, since the dropper container 1 of the present embodiment has a structure in which the actuation top wall 32 of the actuation member 30 covers the upper end opening of the dropper tube 60 from above, even if there is a variation in the diameter or the like of the upper end opening of the dropper tube 60, the actuation top wall 32 can be appropriately maintained in a state of covering the upper end opening and hence the actuation top wall 32 can appropriately seal the upper end opening of the dropper tube 60.

The flat surface 54c extending in a direction orthogonal to the up-down direction and facing in the up-down direction is formed at a portion of the inner surface of the guide groove 54a, against which the engagement protrusion 31a is pressed in the up-down direction when a pressing down force is applied to the actuation member 30 located at the ascending end position. Thus, even if a pressing down force is transmitted to the actuation member 30 when the operation member 40 is pressed down with a strong force, the engagement protrusion 31a is pressed against the flat surface 54c of the guide groove 54a, and the engagement protrusion 31a is restricted from moving along the guide groove 54a. That is, the descending movement of the actuation member 30 relative to the inner cap 50 can be restricted.

Accordingly, even if the operation member 40 of the dropper container 1, designed such that the amount of contents to be sucked into the dropper tube 60 before the actuation member 30 reaches the ascending end position is greater than the above-described specified amount, is pressed down with a strong force, the contents inside the dropper tube 60 can be prevented from being discharged from the lower end opening of the dropper tube 60 in an amount greater than the specified amount.

Since the guide groove 54a is provided with the restricting portion 54b, the engagement protrusion 31a is separably locked on the restricting portion 54b when the actuation member 30 is located at the descending end position and seals the upper end opening of the dropper tube 60, so that the ascending movement of the actuation member 30 can be restricted. Further, the actuation member 30 located at the descending end position can be restricted from suddenly ascending relative to the dropper tube 60 due to vibration or impact during transportation or the like, and thus the sealing of the upper end opening of the dropper tube 60 can be restricted from being released.

Since the actuation top wall 32 seals the upper end opening of the dropper tube 60, and the actuation member 30 is likely to suddenly ascend relative to the dropper tube 60 due to vibration or impact during transportation or the like, for example, compared to the configuration or the like in which the actuation member includes a sealing tube that seals the upper end opening of the dropper tube by fitting, the effect of restricting the actuation member 30 located at the descending end position from suddenly ascending relative to the dropper tube 60 becomes remarkable.

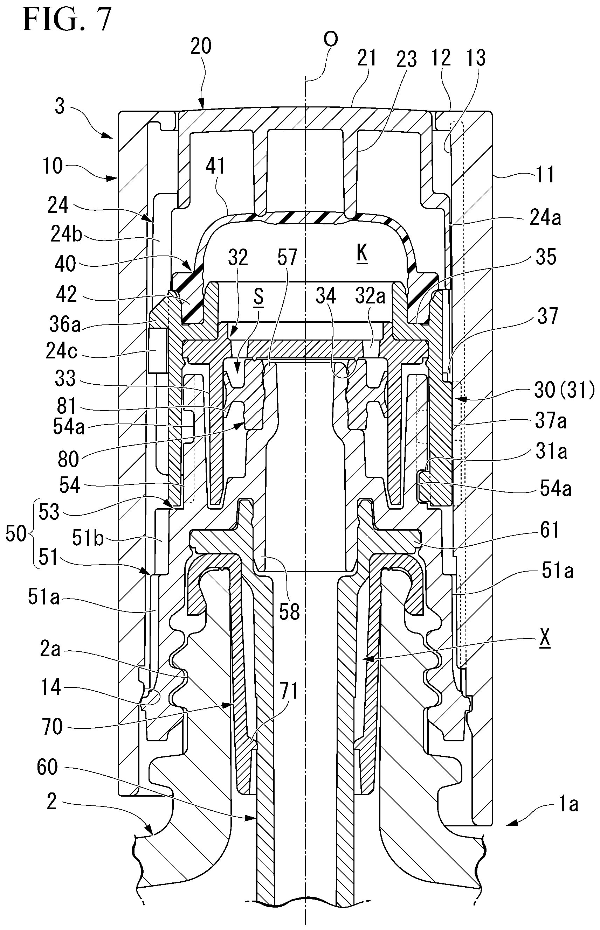

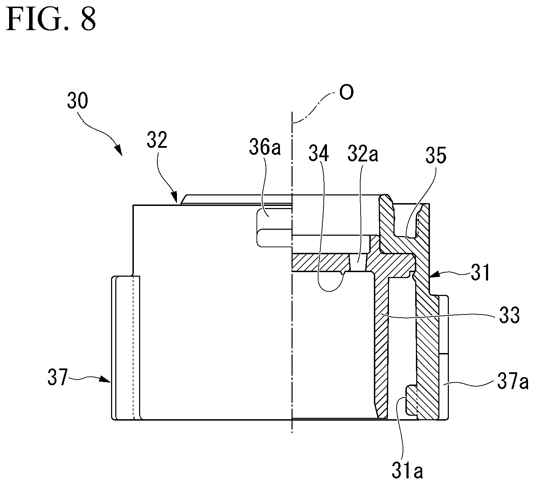

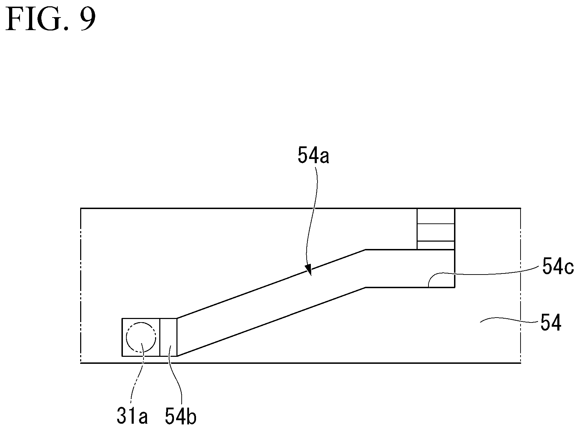

Next, a dropper container 1a according to a second embodiment of the present invention will be described with reference to FIGS. 7 to 9.

Furthermore, in the second embodiment, the same components as those in the first embodiment are denoted by the same reference numerals, their descriptions will be omitted, and only the differences will be described.

In the dropper container 1a of the present embodiment, the engagement protrusion 31a is formed in a columnar shape protruding radially inward from the inner peripheral surface of the actuation peripheral wall 31. The engagement protrusion 31a is provided at the lower end portion of the actuation peripheral wall 31. The actuation member 30 is composed of two components, one component thereof corresponds to a portion of the actuation top wall 32 located further radially inward than the fixing groove 35 and includes the sealing protrusion 34, the sliding tube portion 33, and the plurality of air holes 32a, and the other component thereof includes the actuation peripheral wall 31 and a portion of the actuation top wall 32 in which the fixing groove 35 is located.

The restricting portion 54b is a protrusion formed on the inner surface of the guide groove 54a and is formed such that the columnar engagement protrusion 31a can surmount the restricting portion 54b in the circumferential direction. The restricting portion 54b is formed in a ridge shape to cross the guide groove 54a. At the end of the guide groove 54a on the fastening side in the circumferential direction, a portion located further toward the fastening side in the circumferential direction than the restricting portion 54b extends straight in the circumferential direction, and the engagement protrusion 31a of the actuation member 30 located at the descending end position is accommodated in the portion.

As described above, in the dropper container 1a of the present embodiment, in addition to the effect obtained by the dropper container 1 described above, since the restricting portion 54b is formed such that the columnar engagement protrusion 31a can surmount the restricting portion 54b in the circumferential direction, when the actuation member 30 is to be located at the descending end position and to seal the upper end opening of the dropper tube 60, the user can easily recognize this state.

Furthermore, the technical scope of the present invention is not limited to the above-described embodiments, and various modifications can be made within the scope of the present invention.

For example, the sliding tube portion 33 may be provided in the inner cap 50, the piston 80 may be provided in the actuation member 30, and as the actuation member 30 moves up and down relative to the inner cap 50, the piston 80 may slide on the outer peripheral surface of the sliding tube portion 33.

The actuation member 30 may not have the sealing protrusion 34.

The inner cap 50 may not be provided with the releasing recess 51b.

A sealing material pressed down by the lower surface of the actuation top wall 32 and sealing the upper end opening of the dropper tube 60 may be provided between the lower surface of the actuation top wall 32 and the upper end opening of the dropper tube 60. This sealing material may be formed of a material softer than that forming the actuation member.

In this case, since the sealing material pressed down by the lower surface of the actuation top wall 32 and sealing the upper end opening of the dropper tube 60 is provided between the lower surface of the actuation top wall 32 and the upper end opening of the dropper tube 60 and the sealing material is formed of a material softer than that forming the actuation member 30, it is possible to seal the upper end opening of the dropper tube 60 while the sealing material is compressed and deformed, and to reliably seal the upper end opening of the dropper tube 60.

When the piston 80 is formed in an annular shape arranged coaxially with the container axis O, at least the upper end of the piston 80 that comes into contact with the lower surface of the actuation top wall 32 may be formed of a material softer than that forming the actuation member 30. That is, the upper end of the piston 80 may be used as a sealing material that seals the upper end opening of the dropper tube 60, and in this case, the sealing material is formed integrally with the piston 80. In this case, it is possible to reliably seal the upper end opening of the dropper tube 60 while preventing an increase in the number of components.

In addition, within the scope of the present invention, the components of the above-described embodiments can be replaced with well-known components as appropriate, and the above-described embodiments and modifications may be combined as appropriate.

### REFERENCE SIGNS LIST

1, 1a Dropper container
2 Container body
2a Mouth portion
10 Outer cap
30 Actuation member
31a Engagement protrusion
33 Sliding tube portion
40 Operation member
50 Inner cap
54 Insertion tube
60 Dropper tube
80 Piston
54a Guide groove
54b Restricting portion
54c Flat surface
K Expansion/contraction space
O Container axis
S Actuation space

## Claims

1. A dropper container comprising:
a container body having a tubular shape with a bottom and for storing contents;
an inner cap detachably externally mounted on a mouth portion of the container body and configured to be attached to and detached from the mouth portion in accordance with rotation around a container axis;
a dropper tube extending downward from the inner cap and having a lower end opening located inside the container body;
an outer cap externally mounted on the inner cap to be rotatable around the container axis in a state where a predetermined amount or more of rotation around the container axis is restricted;
an actuation member provided inside the outer cap to be restricted in rotation around the container axis relative to the outer cap and configured to move up and down relative to the inner cap by the actuation member rotating around the container axis relative to the inner cap; and
an operation member attached to the actuation member and forming an expansion/contraction space communicating with an upper end opening of the dropper tube between the operation member and the actuation member,
wherein either one of the inner cap or the actuation member is provided with a sliding tube portion extending in an up-down direction and forming part of a partition wall of an actuation space communicating with the upper end opening of the dropper tube, and the other of the inner cap or the actuation member is provided with a piston configured to expand and contract the actuation space by sliding on an inner peripheral surface or an outer peripheral surface of the sliding tube portion as the actuation member moves up and down relative to the inner cap, and
wherein the actuation member is formed in a tubular shape with a top including an actuation top wall covering the upper end opening of the dropper tube from above and an actuation peripheral wall.

2. The dropper container according to claim 1,
wherein the inner cap is provided with a sealing material configured to come into contact with a lower surface of the actuation top wall to seal the upper end opening of the dropper tube, and
wherein the sealing material is formed of a material softer than that forming the actuation member.

3. The dropper container according to claim 2,
wherein the sliding tube portion is formed on the lower surface of the actuation top wall,
wherein the piston is provided in the inner cap, and
wherein the sealing material is formed integrally with the piston.

4. The dropper container according to any one of claims 1 to 3,
wherein the actuation member seals the upper end opening of the dropper tube,
wherein the inner cap is provided with an insertion tube inserted into the actuation peripheral wall and extending in the up-down direction,
wherein either one of an inner peripheral surface of the actuation peripheral wall or an outer peripheral surface of the insertion tube is provided with an engagement protrusion inserted into a guide groove formed on the other thereof to be movable along the guide groove,
wherein the actuation member moves up and down relative to the inner cap as the engagement protrusion moves relatively along the guide groove in accordance with rotation of the actuation member around the container axis relative to the inner cap, and
wherein a flat surface extending in a direction orthogonal to the up-down direction and facing in the up-down direction is formed in a portion of an inner surface of the guide groove against which the engagement protrusion abuts in the up-down direction when a pressing down force is applied to the actuation member located at an ascending end position thereof.

5. The dropper container according to any one of claims 1 to 3,
wherein the actuation member seals the upper end opening of the dropper tube,
wherein the inner cap is provided with an insertion tube inserted into the actuation peripheral wall and extending in the up-down direction,
wherein either one of an inner peripheral surface of the actuation peripheral wall or an outer peripheral surface of the insertion tube is provided with an engagement protrusion inserted into a guide groove formed on the other thereof to be movable along the guide groove,
wherein the actuation member moves up and down relative to the inner cap as the engagement protrusion moves relatively along the guide groove in accordance with rotation of the actuation member around the container axis relative to the inner cap, and
wherein the guide groove is provided with a restricting portion configured to be separably locked on the engagement protrusion and to restrict ascending movement of the actuation member when the actuation member is located at a descending end position thereof.

6. The dropper container according to claim 4,
wherein the guide groove is provided with a restricting portion configured to be separably locked on the engagement protrusion and to restrict ascending movement of the actuation member when the actuation member is located at a descending end position thereof.
